# EUROPÄISCHE PATENTSCHRIFT

(11) **EP 0 836 966 B1**
(45) Veröffentlichungstag und Bekanntmachung des Hinweises auf die Patenterteilung: **29.06.2005**
(21) Anmeldenummer: 97117239.0
(22) Anmeldetag: 06.10.1997
(51) Int. Cl.: B60R 16/02

(54) **Anordnung zur elektrischen Energieversorgung**
Electric energy supplying device
Dispositif d'alimentationen énergie électrique

(30) Priorität: 18.10.1996 DE 19643014
(43) Veröffentlichungstag der Anmeldung: 22.04.1998
(73) Patentinhaber: Conti Temic microelectronic GmbH, 90411 Nürnberg (DE)
(72) Erfinder: Fendt, Günter, 86529 Schrobenhausen (DE); Hora, Peter, 86529 Schrobenhausen (DE)

(56) Entgegenhaltungen:
- DE-C- 19 503 460

## Beschreibung

Die Erfindung betrifft eine Anordnung zur elektrischen Energieversorgung mindestens eines längs einer Spannungsversorgungsleitung angeordneten Verbrauchers, vorzugsweise in Kraftfahrzeugen. Solche Anordnungen sind in der Art bekannt, daß eine Leitung mit einer Spannung von z.B. +12 Volt zu zahlreichen Verbrauchern (z. B. Elektromotoren andere Geräte) geführt ist, die jeweils einpolig an der Leitung und außerdem an Masse (Minuspol der Energieversorgung) angeschlossen sind. Tritt ein niederohmiger Leckwiderstand oder ein Kurzschluß der 12-Volt-Leitung nach Masse auf, so sind alle Verbraucher nicht mehr betriebsbereit, und es besteht die Möglichkeit, daß sich die Fahrzeugbatterie durch zu große Stromentnahme entlädt.

Der Erfindung liegt die Aufgabe zugrunde, diese Nachteile zu vermeiden oder zu verringern. Diese Aufgabe wird dadurch gelöst, daß die Anordnung eine Spannungsversorgungsvorrichtung (Zentralgerät, Modul) aufweist, die mindestens einen Eingang für eine Versorgungsspannung und mindestens einen Ausgang für die Versorgungsspannung und eine Prüfeinrichtung aufweist, daß die Prüfeinrichtung zum Prüfen eines Ausgangs für die Versorgungsspannung auf einen an diesem Ausgang wirksamen Kurzschluß, nämlich einen dort wirksamen zu kleinen Widerstand, ausgebildet ist, und daß die Spannungsversorgungsvorrichtung eine Schaltereinrichtung aufweist und derart ausgebildet ist, daß sie eine ihr zugeführte versorgungsspannung erst dann mittels der Schaltereinrichtung an den von der Prüfeinrichtung geprüften Ausgang durchschaltet, wenn die Prüfung das Nichtvorhandensein eines Kurzschlusses ergeben hat. Zur Erfindung gehört auch ein Bus-System.

Die Erfindung eignet sich dazu, in Fällen, in denen zahlreiche Endstufen (Elektronikeinheiten), z.B. für Airbag-Steuergeräte, die nicht mehr in einem einzigen Gehäuse an zentraler Stelle untergebracht werden können, die Endstufen, die insbesondere die Zündung eines Gasgenerators oder Gurtstraffers zur Aufgabe haben, dezentral anzuordnen und sequentiell mit elektrischer Betriebsenergie zu versorgen. An zentraler Stelle befinden sich dann beispielsweise nur noch die Signalverarbeitung zur Auswertung der bei einem Zusammenstoß auftretenden Signale (Crashsignale) sowie die Schnittstellen zu den einzelnen dezentralen Geräten neben dem Netzteil zur allgemeinen Energieversorgung.

Die Erfindung ermöglicht es in vorteilhafter Weise, ein Bus-Spannungs-(Energie)-Versorgungskonzept in einem ringförmig aufgebauten System zu verwirklichen, welches bei Einfachfehlern (z.B. ein einziger Kurzschluß im Energieversorgungsbus oder eine einzige Unterbrechung) es noch ermöglicht, die zwischen dem zur Energieversorgung dienenden Zentralgerät und der Schadensstelle liegenden mit Energie zu versorgenden Elemente betriebsbereit zu halten. Wird, wie später im Ausführungsbeispiel beschrieben, ein ringförmiger Bus (oder ein Bus mit zwei Enden, an denen jeweils elektrische Energie eingespeist wird) verwendet, und werden dabei die Spannungsversorgungseinrichtungen, die in zwei Richtungen betrieben werden können und später ebenfalls beschrieben sind, verwendet, so können alle Elemente, die an einem Bus angeschlossen sind, beim Auftreten eines Einfachfehlers am Bus weiterhin mit Energie versorgt werden. Bei sternförmig aufgebauten Systemen wird dadurch sichergestellt, daß bei einem Kurzschluß im Energieversorgungsbus oder bei einer Unterbrechung nicht der gesamte Strang ausfällt, sondern das Bussystem bis zur Fehlerstelle funktionsfähig bleibt.

Weitere Vorteile der Erfindung liegen darin, daß zur Aufrechterhaltung eines störungsfreien Betriebs bei Einfachfehlern nicht eine weitere Versorgungsleitung in dem die einzelnen Komponenten in einem Kraftfahrzeug verbindenden Kabelbaum nötig wird. Weiter ist von Vorteil, daß die Kondensatoren in den einzelnen Modulen, die während einer kurzen Zeit deren Betriebsfähigkeit noch aufrechterhalten, selbst wenn die externe Spannungsversorgung (Autoakkumulator) in Folge eines Unfalls ausgefallen sein sollte, kleiner dimensioniert werden können, da diese mit einer definierten Spannung vom Zentralgerät versorgt werden können und nicht mit der untersten definierten versorgungsspannung des Autoakkumulators berechnet werden müssen. Dies gilt insbesondere, wenn die dem Versorgungsgerät zugeführte Spannung unabhängig von der aktuellen Batteriespannung auf z.B. 12 oder 20 Volt gehalten wird.

Bei einer Ausführungsform der Erfindung ist vorgesehen, daß die Spannungsversorgungsvorrichtung derart ausgebildet ist, daß die Versorgungsspannung erst dann an den Ausgang durchgeschaltet werden kann, wenn die Spannungsversorgungsvorrichtung eine für ihren eigenen Betrieb und vorzugsweise für den Betrieb eines an sie angeschlossenen Verbrauchers ausreichende Spannung erreicht hat. Dabei ist von Vorteil, daß bei einem Kurzschluß nicht zwangsläufig alle Verbraucher ausfallen.

Vorteilhaft ist ein Kondensator zum Speichern der Versorgungsspannung vorgesehen.

Bei einer Ausführungsform der Erfindung ist vorgesehen, daß eine Schwellenwertvorrichtung vorhanden ist, die dann, wenn die Spannung an dem Ausgang, an den die Versorgungsspannung durchgeschaltet werden soll, einen vorbestimmten Schwellenwert überschreitet, das Leitendwerden einer elektrisch steuerbaren Schaltereinrichtung veranlaßt, die zwischen den Kondensator und den Ausgang geschaltet ist. Dadurch kann ein Weiterschalten der Versorgungsspannung bei einem Kurzschluß einfach verhindert werden.

Bei einer Ausführungsform der Erfindung ist vorgesehen, daß die Prüfeinrichtung eine Stromquelle aufweist, die mit dem Anschluß verbunden ist, an den die Versorgungsspannung durchgeschaltet werden soll. Dadurch kann einfach und sicher auf Kurzschluß geprüft werden.

Bei einer Ausführungsform der Erfindung ist vorgesehen, daß eine Schwellenwertvorrichtung vorhanden ist, die dann, wenn die Spannung an dem Kondensator einen vorbestimmten Schwellenwert überschreitet, die Stromquelle am Ausgang aktiviert. Dadurch wird sichergestellt, daß vor einem weiterschalten der Versorgungsspannung das Modul betriebsfähig ist.

Eine Ausführungsform der Erfindung ist gekennzeichnet durch einen symmetrischen Aufbau mit zweifachem Vorhandensein aller Komponenten mit der Ausnahme, daß der Kondensator nur einmal vorhanden sein kann, wobei die Anordnung so ausgebildet ist, daß zwei Anschlüsse je nach der anliegenden Versorgungsspannung als Eingang einerseits und Ausgang andererseits, oder als Ausgang einerseits und als Eingang andererseits betreibbar sind. Dadurch kann die Versorgungsspannung in zwei Richtungen durchgeschaltet werden.

Eine Ausführungsform der Erfindung betrifft ein Bussystem für die elektrische Energieversorgung einer Mehrzahl von Verbrauchern, gekennzeichnet durch eine Spannungsversorgungsvorrichtung wie oben beschrieben als Zentralgerät für die Energieversorgung einer Mehrzahl von Verbrauchern und/oder als Modul für die Energieversorgung eines Verbrauchers, ggf. mit Energieversorgung nachgeschalteter Module. Ein solches Bussystem ist vielseitig verwendbar.

Weitere Merkmale und Vorteile der Erfindung ergeben sich aus der nachfolgenden Beschreibung von Ausführungsbeispielen der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen:
- Fig. 1: ein Blockschaltbild einer Anordnung mit ringförmigem Bussystem für die Energieversorgung,
- Fig. 2: ein Ausführungsbeispiel eines Zentralgeräts zur Speisung eines einzigen Zweiges des Energieversorgungsbusses,
- Fig. 3: ein Ausführungsbeispiel eines Energieversorgungsmoduls, das für die Verwendung in einem ringförmigen Energieversorgungsbus geeignet ist,
- Fig. 4: ein Schaltbild einer Stromquelle.

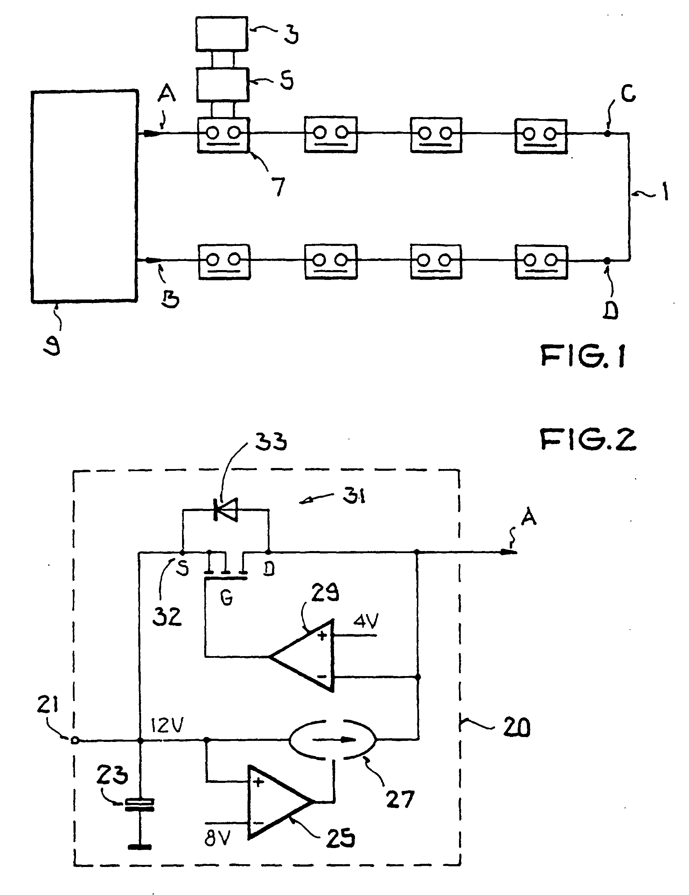

Der in Fig. 1 gezeigte Bus 1 dient der Versorgung einer Mehrzahl (im Beispiel acht) von elektrischen Verbrauchern 3, die über jeweils einen zur elektrischen Energieversorgung (nachfolgend auch kurz Spannungsversorgung genannt) dienenden Modul 5 an den Bus 1 angeschlossen sind. Hierzu weist der Bus 1 eine Anzahl von Steckvorrichtungen 7 auf, die derart ausgebildet sind, daß sie dann, wenn ein Modul 5 angesteckt ist, diesen elektrisch mit dem Bus 1 verbinden, und daß dann, wenn ein Modul 5 nicht angeschlossen ist, die jeweilige Steckvorrichtung 7 intern oder mittels eines Kurzschlußsteckers kurzgeschlossen ist und somit die Verbindung zur nächsten Steckvorrichtung herstellt. Zur Zeichnungsvereinfachung ist lediglich ein einziges Modul 5 und ein einziger elektrischer Verbraucher 3 in Fig. 1 eingezeichnet. Der Bus ist ringförmig.

Der Bus 1 ist mit seinen beiden Enden mit je einem Energieversorgungsausgang A bzw. B eines Duplex-Zentralgeräts (DZG) 9 verbunden. Durch das Wort "Duplex" soll ausgedrückt werden, daß dieses Zentralgerät in der Lage ist, zwei Ausgänge in gleicher Weise mit Betriebsspannung für Verbraucher zu versorgen. Es kann daher der in Fig. 1 gezeichnete Bus angeschlossen sein. Stattdessen könnte auch der ringförmige Bus durch Wegfall der Verbindungsleitung zwischen den mit dem Buchstaben C und D bezeichneten Punkten in zwei lineare Einzelbusse unterteilt sein.

Der Bus 1 der Fig. 1 zeigt ledigilch diejenige Leitung, die zur Weiterleitung der positiven versorgungsspannung dient. Die Leitung für die negative Versorgungsspannung ist nicht gezeigt. Sie kann durch eine separate Leitung und/oder durch Teile der metallischen Konstruktion des Fahrzeugs gebildet sein.

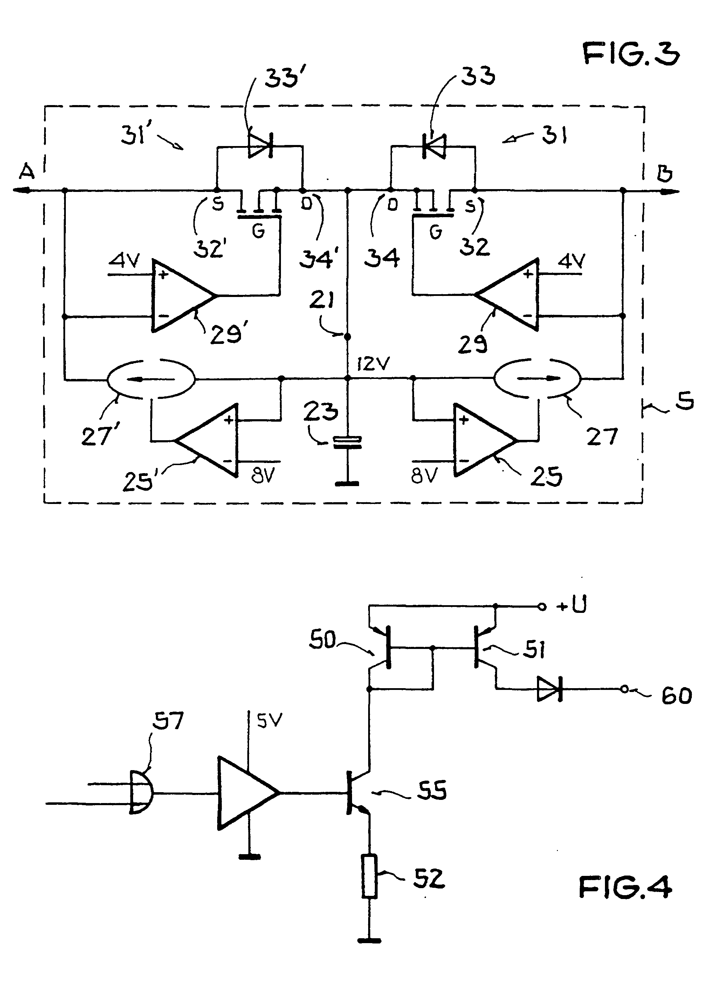

Fig. 2 zeigt ein Zentralgerät (ZG) 20, das zur Versorgung eines einzelnen Zweigs eines ringförmigen Busses oder eines einzelnen linearen Busses ausgebildet ist. Zur Bildung des Duplex-Zentralgeräts 9 der Fig. 1 könnten beispielsweise zwei Zentralgeräte 20 vorgesehen sein, von denen das eine mit dem Anschluß A und das andere mit dem Anschluß B der Fig. 1 zu verbinden wäre.

Das Zentralgerät 20 weist einen Anschluß 21 auf, der mit einer Gleichspannung von beispielsweise +12 oder +20 Volt zu versorgen ist. Dies kann zweckmäßig durch ein besonderes Spannungsversorgungsgerät erfolgen, das aus der Spannung von beispielsweise 12 Volt eines Kraftfahrzeuges, die erheblichen Schwankungen nach oben und unten unterliegen kann, eine relativ konstante Spannung von 12 Volt erzeugt.

Das Zentralgerät 20 ist derart ausgebildet, daß es nach dem Einschalten der Spannungsversorgung beispielsweise eines Kraftfahrzeugs dann, wenn das Zentralgerät 20 einen stabilen Zustand angenommen hat, die Spannung von 12 Volt nicht unmittelbar an den Ausgang A durchschaltet, sondern zuerst prüft, ob der Ausgang A mit einem so niedrigen Abschlußwiderstand gegenüber Masse versehen ist, daß dies als Kurzschluß angesehen wird. Beim Vorhandensein eines derartigen als Kurzschluß interpretierten Zustands wird die Spannung von beispielsweise 12 Volt vom Anschluß 21 nicht an den Anschluß A durchgeschaltet. Dadurch wird verhindert, daß unnötigerweise zu viel Leistung aus der Fahrzeugbatterie entnommen wird. Außerdem können dadurch mögliche Gefahren durch Überhitzung vermieden werden.

Im Beispiel weist das Zentralgerät 20 einen zwischen den Anschluß 21 und Masse geschalteten Kondensator 23 auf, der im Beispiel einen Wert von 470 µF hat. Mit dem Anschluß 21 ist der nicht-invertierende Anschluß eines Komparators 25 verbunden, an dessen invertierendem Eingang eine Spannung von +8 Volt anliegt. Das Ausgangssignal des Komparators 25 nimmt daher dann einen hohen Wert an, wenn die Spannung am Anschluß 21 einen Wert von +8 Volt überschreitet. Der Ausgang des Komparators 25 ist mit einem Steuereingang einer Stromquelle 27 verbunden. Diese ist durch ein Pfeilsymbol, das zwischen zwei parabelförmige Linien eingesetzt ist, symbolisiert. Der Stromeingang der Stromquelle 27 ist mit dem Anschluß 21 verbunden, der Stromausgang der Stromquelle 27 ist mit dem Anschluß A verbunden. Mit dem Anschluß A ist außerdem der invertierende Eingang eines weiteren Komparators 29 verbunden, dessen nicht-invertierender Eingang an einer positiven Spannung von +4 Volt liegt. Der Ausgang des weiteren Komparators 29 ist mit dem Steuereingang einer elektrisch gesteuerten Schaltereinrichtung 31 verbunden, die im übrigen einerseits mit dem Anschluß 21 und andererseits mit dem Anschluß A verbunden ist und je nach dem Wert der dem Steuereingang zugeführten Spannung die Verbindung zwischen den beiden genannten Anschlüssen herstellt oder trennt, soweit es sich um einen Stromfluß von Anschluß 21 zum Anschluß A handelt.

Im Beispiel ist die schaltereinrichtung 31 durch einen niederohmigen Halbleiterschalter, speziell einen Transistor, im Beispiel einen Feldeffekttransistor (FET) 32 verwirklicht, und zwar im Beispiel der Fig. 2 durch einen p-Kanal-FET.

Der Gate-Anschluß G des FET 32 ist, wie erwähnt, mit dem Ausgang des Komparators 29 verbunden, der Source-Anschluß S ist mit dem positiven Anschluß des Kondensators 23 und somit mit den Anschluß 21 verbunden, der Drain-Anschluß D ist mit dem Anschluß A verbunden. In dem FET 32 ist, wie allgemein üblich, eine Diode 33 als Schutzdiode integriert, die bei gesperrtem FET 32 einen Stromfluß vom Anschluß D zum Anschluß S ermöglicht.

Die Wirkungsweise ist wie folgt:

Nach dem Einschalten der Spannungsversorgung, z.B. eines Kraftfahrzeuges, in dem das Gerät 20 eingebaut ist, wird der Kondensator 23 mit einer bestimmten Zeitkonstante aufgeladen. Die Schaltereinrichtung 31 ist für den Stromfluß vom Kondensator 23 zum Ausgang A gesperrt.

Sobald die Spannung am Kondensator 23 den Wert von 8 Volt überschreitet, wird über den Komparator 25 die Stromquelle 27 eingeschaltet. Diese speist einen konstanten Strom, der im Beispiel einen Wert von 30 mA hat, in die mit dem Anschluß A verbundenen Leitungen ein. Wenn der Anschluß A nicht mit einem zu niedrigen Widerstand nach Masse abgeschlossen ist, wenn also kein Kurzschluß vorliegt, so erreicht die Spannung am Ausgang A nach einer gewissen Zeit einen wert von +4 Volt. Dies führt dazu, daß die Spannung am Gate G des FET 32 von einem positiven Wert zu einem negativen Wert wechselt, und dadurch wird der FET 32 leitend gesteuert und somit ist ein Stromfluß vom Kondensator 23 zum Ausgang A möglich. Dagegen würde bei einem Kurzschluß des Ausgangs A die genannte Spannung von 4 Volt nicht erreicht werden, und der FET 32 würde nicht leitend gesteuert werden. Die Komparatoren bilden Schwellenwertvorrichtungen, und der Komparator 29 bildet zusammen mit der Stromquelle 27 eine Vorrichtung zum Prüfen des Ausgangs A auf einen dort vorhandenen Kurzschluß. Der Strom der Stromquelle ist erheblich kleiner als der Strom, der beim Durchschalten der Schaltereinrichtung 31 bei einem Kurzschluß zum Anschluß A fließen würde.

Anstatt eines p-Kanal-FETs für die Schaltereinrichtung 31 könnte auch ein n-Kanal-FET vorgesehen werden, wobei dann nur dessen Anschlüsse S und D sowie die Gate-Steuerspannung gegenüber der Fig. 2 vertauscht wären. Die in dem n-Kanal-FET ohnehin vorhandene Diode zum Schutz des FET ist dabei bezüglich des dem Anschluß A zuzuführenden Stroms in gleicher Weise gepolt wie in Fig. 1.

Zur Bildung des Duplex-Zentralgeräts 9 in Fig. 1 können zwei Zentralgeräte 20 gemäß Fig. 2 vorgesehen sein, die beide jeweils mit 12 Volt versorgt werden, und von denen das eine den einen Zweig des Energieversorgungsbusses und das andere den anderen Zweig des Energieversorgungsbusses der Fig. 1 speist.

Der in Fig. 3 gezeigte Spannungsversorgungsmodul 5 weist zwei Anschlüsse A und B auf, die so zu verstehen sind, daß der Anschluß A dem Anschluß A des Duplex-Zentralgeräts 9 in Fig. 1 näher liegt, und daß dann, wenn das Modul 5 vom Anschluß A des Duplex-Zentralgeräts 9 aus irgendwelchen Gründen nicht mit Energie versorgt werden kann, diese Energie vom Anschluß B des Duplex-Zentralgeräts 9 über den Bus 1 dem Anschluß B des Moduls 5 zugeführt wird.

Das Modul 5 weist die gleichen Bauelemente wie das Zentralgerät 20 auf, nämlich den Kondensator 23 und im rechten Teil der Fig. 3 die übrigen Elemente der Fig. 2, wobei hier allerdings ein n-Kanal-FET (FET 34) vorgesehen ist, wie dies bei der Beschreibung der Fig. 2 bereits als Variante beschrieben worden war. Es ist ebenfalls schon erwähnt worden, daß die Funktion bei beiden Arten von FETs in der vorliegenden Schaltung völlig identisch ist.

Das Modul 5 weist im linken Teil der Fig. 3 spiegelbildlich zu dem rechten Teil der Fig. 3 jeweils noch einmal die gleichen Bauelemente (mit Ausnahme des nur einmal vorhandenen Kondensators 23) auf, die jeweils mit einem Apostroph gekennzeichnet sind. Und zwar sind dies ein Komparator 25', eine Stromquelle 27', ein weiterer Komparator 29' und eine weitere elektrisch steuerbare Schaltereinrichtung 31' mit einem FET 34' und einer Diode 33'. Deren Source-Anschluß S ist mit dem Anschluß A verbunden, und der Source-Anschluß S des anderen FET 34 ist mit dem Anschluß B verbunden. Die Drain-Anschlüsse D der beiden FETs sind miteinander und mit dem positiven Anschluß des Kondensators 23 verbunden. Die Bauelemente im linken Teil der Fig. 3 sind in gleicher Weise miteinander verbunden wie diejenigen im rechten Teil.

Auf den spiegelbildlichen Teil der Fig. 3 kann dann verzichtet werden, wenn die Energieversorgung nur in einer Richtung (von A nach B) erforderlich ist, wie z. B. in einem sternförmig aufgebauten System.

Die Wirkungsweise der Anordnung nach Fig. 3 ist wie folgt: Es wird zunächst angenommen, daß das Modul 5 der Fig. 3 das erste Modul ist, das unmittelbar mit dem Anschluß A in Fig. 1 verbunden ist, und daß noch zahlreiche weitere Module bis hin zum Anschluß B des Duplex-Zentralgeräts 9 der Fig. 1 vorhanden sind. Wird die Anordnung eingeschaltet, so prüft, wie bereits erwähnt, das Duplex-Zentralgerät 9, ob an seinem Anschluß A ein Kurzschluß vorliegt, bei Nicht-Vorhandensein eines Kurzschlusses wird der Anschluß A des Moduls 5 (Fig. 3) mit Spannung versorgt. Der FET 34' in der Einrichtung 31' ist gesperrt, die Diode 33' zwischen den Anschlüssen S und D wird jedoch in Durchlaßrichtung belastet und ist daher leitend. Daher fließt Strom vom Anschluß A in die Anordnung der Fig. 3 und lädt den Kondensator 23 auf. Die Schwellenwerte aller Komparatoren werden zunächst nicht erreicht, die rechte Schaltereinrichtung 31 ist nicht leitend. Wie bereits anhand der Fig. 2 erläutert, versorgt die Anordnung der Fig. 3 eine an ihren Anschluß B angeschlossene Einrichtung, nämlich ein weiteres Modul 5, dann mit Strom, wenn am Anschluß B kein Kurzschluß vorhanden ist. Da das Aufladen des Kondensators 23 eine gewisse Zeit benötigt, werden nicht alle Module 5, die in Serie geschaltet sind, gleichzeitig an Betriebsspannung gelegt, sondern einer nach dem anderen sequentiell, beginnend bei den Ausgängen A und B des Duplex-Zentralgeräts 9.

Wenn die Spannung am Kondensator einen Wert von etwa 4 V (abhängig von der Durchlaßspannung der Diode 33') überschreitet, wird über den Komparator 29' der linke FET 34' in Fig. 3 leitend geschaltet, ohne daß die zugeordnete Stromquelle 27' aktiv sein muß. Dadurch wird zwar die Arbeitsweise der in Fig. 3 gezeigten Schaltung nicht wesentlich geändert, weil auch vor dem Leitendschalten des linken FET 34' über die Diode 33' Strom floß. Es kann jedoch durch das Leitendwerden des linken FET der im Stromweg liegende elektrische Widerstand möglicherweise verringert werden, wodurch die elektrischen Verluste ebenfalls verringert werden, was von Vorteil ist. Der rechte FET 34 wird, wie schon beschrieben, leitend, wenn die Spannung am Kondensator 23 die Spannung von 8 V überschritten hat und am rechten Ausgang B kein Kurzschluß festgestellt wird, da dann die Stromquelle 27 den Ausgang auf einen Wert größer als 4 Volt bringt.

Wenn der Anschluß B der Anordnung nach Fig. 3 einen Kurzschluß aufweist oder wenn die Verbindungsleitung zum nächsten Modul unterbrochen ist, können die nachfolgenden Module von dem in Fig. 3 gezeigten Modul nicht mehr versorgt werden. Diese werden jedoch mit elektrischer Energie vom Anschluß B des Duplex-Zentralgeräts 9 der Fig. 1 versorgt, weil dieses zunächst das erste am Anschluß B angeschlossene Modul und anschließend die weiteren Module mit Betriebsspannung versorgt und schließlich das rechts vom Modul der Fig. 3 angeschlossene Modul von dessen Eingang B her mit Betriebsspannung versorgt. Die in Fig. 3 gezeigten Anordnungen sind nämlich in der Lage, wegen ihres völlig symmetrischen Aufbaus sowohl eine vom linken Anschluß A zugeführte Betriebsspannung zum rechten Anschluß B weiterzuschalten, oder aber eine am rechten Anschluß B liegende Betriebsspannung zum linken Anschluß A weiterzuschalten. Auch kann der Fall eintreten, daß bei genau einem der Module an beiden Anschlüssen A und B eine Versorgungsspannung von benachbarten Modulen geliefert wird, die dann beide ins Innere des Moduls gelangen. Der vom Modul der Fig. 3 gespeiste Verbraucher ist am Kondensator (Anschluß 21) angeschlossen.

In Fällen, bei denen sicher ist, daß ein ringförmiger Bus nicht verwendet wird, sondern lediglich ein linearer, einseitig gespeister Bus, genügt es, anstatt der in Fig. 3 gezeigten symmetrisch ausgebildeten Schaltung für einen Modul lediglich eine Hälfte zu verwenden, nämlich genau die Schaltung, wie sie in Fig. 2 gezeigt ist, oder den rechten (oder linken) Teil der Figur 3 mit dem Kondensator. Diese Schaltung ist in der Lage, auch wenn sie nicht als Zentralgerät verwendet wird, eine ihrem Anschluß 21 zugeführte Spannung zu einem ebenfalls am Anschluß 21, also am Kondensator 23 angeschlossenen Verbraucher zu leiten und zum Anschluß A weiterzuschalten, wenn dort kein Kurzschluß vorhanden ist.

Die in den Fign. 2 und 3 als Symbol gezeigten Stromquellen sind dem Fachmann geläufig. Ein Ausführungsbeispiel einer Stromquelle ist in Fig. 4 gezeigt. Wegen der Einzelheiten wird auf die Zeichnung verwiesen. Die in Fig. 4 gezeigte Schaltung weist zwei emitterseitig parallel geschaltete Transistoren 50, 51 auf, die zusammen eine Stromverstärkung von 100 haben. Der widerstand 52 ist so bemessen (14,3 Kiloohm), daß an ihm eine Spannung von (5-0,7) Volt bei einem Strom durch den Silicium-Transistor 55 von (30 mA)/100 abfällt Die Basis des Transistors 55 wird mit +5V gegenüber Masse leitend gesteuert, wenn einem ODER-Gatter 57 mindestens ein Steuersignal zugeführt wird. Der Collector des Transistors 51 liefert über eine Diode den konstanten Strom von 30 mA an einem Anschluß 60. Beim Einsetzen in die Schaltung der Fig. 2 oder 3 ist der Anschluß 60 mit dem Anschluß A bzw. B zu verbinden, einer der Eingänge des ODER-Gatters mit dem Ausgang des Komparators 25 (25'), und die Emitter der Transistoren 50, 51 sind mit dem positiven Anschluß des Kondensators 23 zu verbinden.

Ein in den Bus eingeschaltetes Energieversorgungsmodul kann, wie aus der obigen Beschreibung deutlich ist, Spannung (Energie) nur dann an ein weiteres Modul weiterleiten, wenn sich das erstgenannte Modul bereits in einem stabilen Zustand befindet und möglicherweise der an ihm angeschlossene Verbraucher bereits arbeitsfähig ist, und wenn am Ausgang des erstgenannten Moduls eine Spannung aufgebaut werden kann.

Um in den Fällen, in denen ein Kurzschluß festgestellt wird, die verlustleistung gegenüber dem relativ geringen Strom von 30 mA, der von der Stromquelle geliefert wird, weiter zu reduzieren, kann es vorteilhaft sein, die Stromquelle in einen getakteten Betrieb übergehen zu lassen, in dem beispielsweise nur noch Strom während einer Zeit von 10% der Gesamtzeit (100 Millisekunden Strom, 900 ms kein Strom) fließt. Auf diese Weise können dann, wenn ein Kurzschluß wieder wegfällt (beispielsweise wenn bei Wartungs- und Prüfarbeiten zu Meßzwecken ein Kurzschluß erzeugt wurde), die normalen Funktionen der Vorrichtung wieder aufgenommen werden, wohingegen bei einem bleibenden Abschalten des betreffenden Moduls dies möglicherweise nicht so einfach erfolgen könnte.

Da das in Fig. 3 gezeigte Modul alle Teile des in Fig. 2 gezeigten Zentralgeräts in symmetrischer Weise doppelt enthält (mit Ausnahme des nur einfach vorhandenen Kondensators), kann ein solches Modul dann, wenn der positive Anschluß des Kondensators mit einer Spannung von z.B. 12 Volt verbunden wird, zur Spannungsversorgung (Energieversorgung) benachbarter Module verwenden werden. Mit anderen Worten, ein solches Modul kann auch als Duplex-Zentralgerät verwendet werden. Dabei kann ein solcher als Zentralgerät dienender Modul auch noch unmittelbar mit einem Verbraucher verbunden sein, oder aber er dient ausschließlich der Spannungsversorgung und ist nicht mit einem Verbraucher verbunden. Die erfindungsgemäßen Module eröffnen die Möglichkeit, innerhalb eines linearen oder ringförmigen Busses durch wechselnden Anschluß beispielsweise einer 12-Volt-Versorgungsspannungsquelle einen Modul einmal als Energieversorgungsmodul für einen Verbraucher, ein anderes Mal als Zentralgerät zur Speisung benachbarter Module zu verwenden.

Die gezeigte Schaltung eignet sich für die Spannungsversorgung von weit mehr Verbrauchern als in Fig. 1 gezeigt ist. Die Schaltung ist für die Versorgung von Airbag- oder Gurtstraffer-Endstufen (die die Energie zum elektrischen Zünden des Gasgenerators eines Airbags oder eines Gurtstraffers liefern müssen) oder sonstiger Endstufen zur Auslösung weiterer Kfz-Sicherheitseinrichtungen geeignet.

Durch die Tatsache, daß die Spannungsversorgung bei dem erfindungsgemäßen Bus-System bidirektional betrieben werden kann und die versorgungsleitung nicht starr durch alle Verbraucher durchgeschleift ist, kann bei einem einzigen Fehler im Kabelbaum dennoch jedes Modul mit Spannung versorgt werden.

## Patentansprüche

1. Anordnung zur elektrischen Energieversorgung mindestens eines längs einer Spannungsversorgungsleitung angeordneten Verbrauchers, vorzugsweise in Kraftfahrzeugen, **dadurch gekennzeichnet, daß** sie eine spannungsversorgungsvorrichtung (9, 20, 5) aufweist, die mindestens einen Eingang (21; A, B) für eine versorgungsspannung und mindestens einen Ausgang (A, B; B, A) für die versorgungsspannung und eine Prüfeinrichtung aufweist, daß die Prüfeinrichtung zum Prüfen eines Ausgangs für die Versorgungsspannung auf einen an diesem Ausgang wirksamen Kurzschluß, nämlich einen dort wirksamen zu kleinen Widerstand, ausgebildet ist, und daß die Spannungsversorgungsvorrichtung eine Schaltereinrichtung (31, 31') aufweist und derart ausgebildet ist, daß sie eine ihr zugeführte versorgungsspannung erst dann mittels der Schaltereinrichtung an den von der Prüfeinrichtung geprüften Ausgang durchschaltet, wenn die Prüfung das Nichtvorhandensein eines Kurzschlusses ergeben hat.

2. Anordnung nach Anspruch 1, **dadurch gekennzeichnet, daß** die Spannungsversorgungsvorrichtung derart ausgebildet ist, daß die versorgungsspannung erst dann an den Ausgang durchgeschaltet werden kann, wenn die Spannungsversorgungsvorrichtung eine für ihren eigenen Betrieb und vorzugsweise für den Betrieb eines an sie angeschlossenen Verbrauchers (3) ausreichende Spannung erreicht hat.

3. Anordnung nach Anspruch 1 oder 2, **dadurch gekennzeichnet, daß** die Spannungsversorgungsvorrichtung einen Kondensator (23) zum Speichern der ihr zugeführten Versorgungsspannung aufweist.

4. Anordnung nach einem der vorhergehenden Ansprüche, **dadurch gekennzeichnet, daß** eine Schwellenwertvorrichtung (29, 29') vorhanden ist, die dann, wenn die Spannung an dem Ausgang, an den die versorgungsspannung durchgeschaltet werden soll, einen vorbestimmten Schwellenwert überschreitet, das Leitendwerden einer elektrisch steuerbaren Schaltereinrichtung (31, 31') veranlaßt, die zwischen den Kondensator (23) und den Ausgang geschaltet ist.

5. Anordnung nach Anspruch 4, **dadurch gekennzeichnet, daß** die Prüfeinrichtung eine Stromquelle (27, 27') aufweist, die mit dem Anschluß verbunden ist, an den die Versorgungsspannung durchgeschaltet werden soll.

6. Anordnung nach Anspruch 5, **dadurch gekennzeichnet, daß** eine Schwellenwertvorrichtung (25, 25') vorhanden ist, die dann, wenn die Spannung an dem Kondensator (23) einen vorbestimmten Schwellenwert überschreitet, die Stromquelle (27, 27') aktiviert.

7. Anordnung nach einem der vorhergehenden Ansprüche, **dadurch gekennzeichnet, daß** die Schaltereinrichtung (31, 31') ein Halbleiterschalterelement, vorzugsweise einen Transistor, weiter vorzugsweise einen FET (32, 34, 34') aufweist.

8. Anordnung nach Anspruch 7, **dadurch gekennzeichnet, daß** die Schaltstrecke der Schaltereinrichtung (31, 31') mit einer Diode (33, 33') als Schutzdiode überbrückt ist.

9. Anordnung nach einem der vorhergehenden Ansprüche, **gekennzeichnet durch** einen symmetrischen Aufbau mit zweifachem Vorhandensein aller Komponenten mit der Ausnahme, daß der Kondensator (23) nur einmal vorhanden sein kann, wobei die Anordnung so ausgebildet ist, daß zwei Anschlüsse je nach der anliegenden Versorgungsspannung als Eingang einerseits und Ausgang andererseits, oder als Ausgang einerseits und als Eingang andererseits betreibbar sind.

10. Bussystem für die elektrische Energieversorgung einer Mehrzahl von Verbrauchern, **gekennzeichnet durch** eine Spannungsversorgungsvorrichtung (9, 20) nach einem der vorhergehenden Ansprüche als Zentralgerät für die Stromversorgung einer Mehrzahl von Verbrauchern und/oder als Modul (5) für die Stromversorgung eines Verbrauchers, ggf. mit Stromversorgung nachgeschalteter Module.

11. Bussystem nach Anspruch 10, **gekennzeichnet durch** eine ringförmige oder **durch** eine lineare Anordnung.

12. Anordnung nach einem der Ansprüche 5 bis 9, **dadurch gekennzeichnet, daß**, falls die Prüfeinrichtung am Ausgang einen Kurzschluß festgestellt, die Stromquelle (27, 27') in einen getakteten Betrieb mit kurzen Stromimpulsen und langen Pausen übergeht.

13. Anordnung nach Anspruch 12, **dadurch gekennzeichnet, daß**, falls die Prüfeinrichtung am Ausgang
a) zunächst einen Kurzschluß festgestellt, die Stromquelle (27, 27') in einen getakteten Betrieb übergeht,
b) jedoch wieder die normalen Funktionen wieder aufgenommen werden, sobald die Prüfeinrichtung wieder keinen Kurzschluß mehr feststellt.

## Claims

1. An arrangement for the electric power supply of at least one electric load, preferably in motor vehicles, said load(s) being arranged on a power supply line, **characterized in that** the arrangement comprises a power supply device (9, 20, 5) comprising at least one input (21; A, B) for a supply voltage and at least one output (A, B; B, A) for the supply voltage and a testing device, **in that** the testing device is configured to check whether a short circuit, that is too low a resistance, is effective at an output for the supply voltage, and **in that** the power supply device comprises a switch device (31, 31') and is configured such that it does not switch a supply voltage supplied to it through to the output tested by the testing device until the test has proved that there is no short circuit, wherein the power supply device switches the supply voltage through by means of the switch device.

2. An arrangement according to claim 1, **characterized in that** the power supply device is configured such that the supply voltage cannot be switched through to the output until the power supply device has reached a voltage level which is sufficient for its own operation and, preferably, for the operation of an electric load (3) connected to it.

3. An arrangement according to claim 1 or 2, **characterized in that** the power supply device comprises a capacitor (23) for storing the supply voltage supplied to the power supply device.

4. An arrangement according to any one of the preceding claims, **characterized in that** there is provided a threshold device (29, 29') causing an electrically controllable switch device (31, 31') connected between the capacitor (23) and the output to become conductive when the voltage exceeds a predetermined threshold value at that output to which the supply voltage is to be switched through.

5. An arrangement according to claim 4, **characterized in that** the testing device comprises a power source (27, 27') connected to that terminal to which the supply voltage is to be switched through.

6. An arrangement according to claim 5, **characterized in that** there is provided a threshold device (25, 25') activating the power source (27, 27') when the voltage exceeds a predetermined threshold value at the capacitor (23).

7. An arrangement according to any one of the preceding claims, **characterized in that** the switch device (31, 31') comprises a static switch, preferably a transistor and more preferably an FET (32, 34, 34').

8. An arrangement according to claim 7, **characterized in that** the break of the switch device (31, 31') is bridged by a diode (33, 33') forming a protective diode.

9. An arrangement according to any one of the preceding claims, **characterized by** a symmetric layout with all components existing twofold with the exception of the capacitor (23) which may be provided as a single capacitor, wherein the arrangement is configured such that a first and a second terminal can be operated as an input and an output respectively or vice versa, depending on the applied supply voltage.

10. A bus system for the electric power supply of a plurality of electric loads, **characterized by** a power supply device (9, 20) according to any one of the preceding claims as a central device for the power supply of a plurality of electric loads and/or as a module (5) for the power supply of one electric load including the power supply of downstream modules, if applicable.

11. A bus system according to claim 10, **characterized by** a ring-shaped or by a linear arrangement.

12. An arrangement according to any one of claims 5 to 9, **characterized in that** the power source (27, 27') will pass over to clocked operation with short current impulses and long quiescent periods if the testing device detects a short circuit at the output.

13. An arrangement according to claim 12, **characterized in that**
a) the power source (27, 27') will pass over to clocked operation if the testing device initially detects a short circuit at the output,
b) but will return to normal operation as soon as the testing device detects the absence of a short circuit.

## Revendications

1. Configuration pour l'alimentation en énergie électrique d'au moins un appareil électrique disposé le long d'une ligne d'alimentation électrique, de préférence sur des véhicules automobiles, **caractérisée en ce qu'**elle présente un dispositif d'alimentation en courant 9, 20, 5, qui présente au moins une entrée (21 ; A, B) pour une tension d'alimentation et au moins une sortie (A, B ; B, A) pour la tension d'alimentation et un dispositif de contrôle, **en ce que** le dispositif de contrôle est formé pour le contrôle d'une sortie pour la tension d'alimentation sur un court-circuit actif à cette sortie, c'est-à-dire une résistance trop faible active à cet endroit, et **en ce que** le dispositif d'alimentation en courant présente un dispositif de commutation (31, 31') et est formé de telle sorte qu'il commute une tension d'alimentation qui lui est amenée tout d'abord au moyen d'un dispositif de commutation à la sortie contrôlée par le dispositif de contrôle, lorsque le contrôle a révélé l'absence d'un court-circuit.

2. Configuration selon la revendication 1, **caractérisée en ce que** le dispositif d'alimentation en courant est formé de telle manière que la tension d'alimentation peut être commutée à la sortie seulement lorsque le dispositif d'alimentation en courant a atteint une tension suffisante pour son propre fonctionnement et de préférence pour le fonctionnement d'un appareil électrique (3) qui lui est raccordé.

3. Configuration selon la revendication 1 ou 2, **caractérisée en ce que** le dispositif d'alimentation en courant présente un condensateur (23) pour le stockage de la tension d'alimentation qui lui est amenée.

4. Configuration selon l'une des revendications précédentes, **caractérisée en ce qu'**un dispositif de valeur de seuil (29, 29') est présent qui, lorsque la tension à la sortie à laquelle la tension d'alimentation doit être commutée dépasse alors une valeur de seuil prédéfinie, fait en sorte qu'un dispositif de commutation (31, 31') commandé électriquement devienne passant, lequel dispositif est connecté entre le condensateur (23) et la sortie.

5. Configuration selon la revendication 4, **caractérisée en ce qu'**un dispositif de contrôle présente une source de courant (27, 27') qui est raccordée à la borne à laquelle la tension d'alimentation doit être commutée.

6. Configuration selon la revendication 5, **caractérisée en ce qu'**un dispositif de valeur de seuil (25, 25') est présent qui active la source de courant (27, 27') à la sortie lorsque la tension au condensateur (23) dépasse une valeur de seuil prédéfinie.

7. Configuration selon l'une des revendications précédentes, **caractérisée en ce que** le dispositif de commutation (31, 31') présente un élément commutateur à semi-conducteurs, de préférence un transistor, et de façon encore plus préférable un FET (32, 34, 34').

8. Configuration selon la revendication 7, **caractérisée en ce que** la distance d'isolement du dispositif de commutation (31, 31') est court-circuitée avec une diode (33, 33') comme diode de protection.

9. Configuration selon l'une des revendications précédentes, **caractérisée par** une construction symétrique avec tous les composants étant présents deux fois, avec comme exception le fait que le condensateur (23) peut n'être présent qu'une fois, avec la configuration étant formée de telle manière que deux bornes respectives peuvent être exploitées suivant la tension d'alimentation adjacente, comme entrée d'un côté et comme sortie de l'autre, ou comme sortie d'un côté et comme entrée de l'autre.

10. Système de bus pour l'alimentation en énergie électrique d'une pluralité d'appareils électriques, **caractérisés par** un dispositif d'alimentation en courant (9, 20) selon l'une des revendications précédentes comme appareil central pour l'alimentation en courant d'une pluralité d'appareils électriques et/'ou en tant que module (5) pour l'alimentation en courant d'un appareil électrique, le cas échéant avec une alimentation en courant des modules commutés ensuite.

11. Système de bus selon la revendication 10, **caractérisé par** une configuration en anneau ou par une configuration linéaire.

12. Configuration selon l'une des revendications 5 à 9, **caractérisée en ce que** que, dans le cas où le dispositif de contrôle constate un court-circuit à la sortie, la source de courant (27, 27') passe en fonctionnement cadencé avec des impulsions de courant brèves et des pauses longues.

13. Configuration selon la revendication 12, **caractérisée en ce que**, dans le cas où le dispositif de contrôle à la sortie
a) constate d'abord un court-circuit, la source de courant (27, 27') passe en fonctionnement cadencé,
b) les fonctions normales sont malgré tout reprises à nouveau dès que le dispositif de contrôle, encore une fois, ne constate plus de court-circuit.
